# EUROPEAN PATENT SPECIFICATION

(11) **EP 0 978 494 B1**
(45) Date of publication and mention of the grant of the patent: **26.01.2005**
(21) Application number: 99113832.2
(22) Date of filing: 15.07.1999
(51) Int. Cl.: C03C 17/36, C03C 17/34

(54) **Method for manufacturing an anti-fog mirror**
Verfahren zur Herstellung eines Antibeschlag-Spiegels
Procédé de fabrication d'un mirroir antibué

(30) Priority: 06.08.1998 JP 23498198
(43) Date of publication of application: 09.02.2000
(73) Proprietor: Murakami Corporation, Shizuoka-shi, Shizuoka, 422-8569 (JP)
(72) Inventor: Komatsu, Toru, Shimada-shi, Shizuoka, 427-0012 (JP); Nakamura, Masatoshi, Fujieda-shi, Shizuoka, 426-0062 (JP)
(74) Representative: Dallmeyer, Georg, Dipl.-Ing.

(56) References cited:
- EP-A- 0 637 572
- EP-A- 0 689 962
- EP-A- 0 820 967
- FR-A- 2 744 117

## Description

This invention relates to a method for manufacturing an anti-fog mirror of a type having an inorganic hydrophilic film on a mirror surface and to an anti-fog mirror.

An anti-fog mirror is used for an outer mirror of a vehicle, a bath-room mirror etc. for preventing deposition of waterdrop on the mirror surface and thereby improving visibility. The assignee's U.S.-A-5,854,708 and US-A-5,594,585, for example, disclose an anti-fog mirror of this type.

The anti-fog mirror disclosed in U.S.-A-5,594,585 is made of a substrate such as glass, a reflecting film formed on the front or rear surface of the substrate and a porous SiO₂ film formed as a hydrophilic film on the outermost surface on the front side of the substrate. The anti-fog mirror disclosed in U.S.-A-5,854,708 has a structure in which a TiO₂ film having a photocatalytic function is formed under the porous SiO₂ film in the structure of the anti-fog mirror disclosed in U.S.-A-5,594,585 whereby contaminants deposited in the openings of the porous SiO₂ film are decomposed and removed to enable the hydrophilic property of the anti-fog mirror to be maintained over a long period of time.

If, in manufacturing an anti-fog mirror of a type in which a reflecting film is formed on the rear surface of a transparent substrate such as glass and a hydrophilic film is formed on the front surface of the substrate, the hydrophilic film is formed first on the front surface and then the reflecting film is formed on the rear surface by sputtering or vacuum deposition, the material of the reflecting film which has scattered during the reflecting film forming process reaches the front side of the substrate and is deposited on the front surface of the hydrophilic film and thereby deteriorates the hydrophilic property of the hydrophilic film. In this case, therefore, it is necessary to cover the surface of the hydrophilic film with a masking material before forming the reflecting film and remove the masking material after forming of the reflecting film and rinse the surface of the hydrophilic film. This results in increase in the manufacturing cost. Further, this increases frequency of pollution of the hydrophilic film by coating and removal of the masking material and rinsing of the hydrophilic film and therefore is undesirable for securing stability in the quality of the product.

If, conversely, the reflecting film is formed first on the rear surface of the substrate and then the hydrophilic film is formed on the front surface by the sol-gel method, calcination at a temperature of 500°C or over in the atmosphere is required and, in this case, oxidation of the reflecting film takes place with the result that a pin hole or change of color takes place in the reflecting film. If the hydrophilic film is formed by the binder method, adhesion is poor because of a low curing temperature and, as a result, the hydrophilic film tends to come off.

In the structure of the anti-fog mirror disclosed in US-A-5,854,708, if the TiO₂ film is thick, the reflecting property is adversely affected and, moreover, it takes time in the film forming process resulting in increase in the manufacturing cost. If, conversely, the TiO₂ film is thin, the ability to decompose contaminants deposited on the porous SiO₂ film is decreased. If the porous SiO₂ film is thick, it becomes difficult for the photocatalytic function of the TiO₂ film to reach the surface of the porous SiO₂ film and, as a result, the ability to decompose contaminants deposited on the porous SiO₂ film is decreased. If, conversely, the porous SiO₂ film is thin, wear resistance of the porous SiO₂ film is decreased, resulting in decrease in the life of the product. Accordingly, the thickness of the TiO₂ film and the porous SiO₂ film must be optimized.

Further, if the TiO₂ film is formed by the sol-gel method, calcination at a temperature of 500°C or over in the atmosphere is necessary and this causes diffusion of alkali ions contained in the substrate into the TiO₂ film with the result that the photocatalytic function of the TiO₂ film is decreased. In this case, therefore, it becomes necessary to form a blocking layer (barrier layer) made of, e.g., SiO₂ between the substrate and the TiO₂ film and this increases the manufacturing cost.

It is, therefore, an object of the invention to provide a method for producing an anti-fog mirror which has overcome the above described problems of the prior art anti-fog mirrors.

The method for manufacturing an anti-fog mirror according to the invention comprises a transparent substrate, a reflecting film formed on the rear surface of the transparent substrate, where said reflecting film is made of Cr, Ni-Cr or Ti or said reflecting film is made of a laminated film of plural layers of inorganic films and a metal film made of Cr, Ni-Cr or Ti being located on the laminated film of plural layers of inorganic films remotely from the transparent substrate, said inorganic films having different refractive indices and having an optical film thickness of λ/4 (where λ represents a specific wavelength) and said laminated having a selective reflecting property with the specific wavelength λ being a center wavelength, the plural layers of the inorganic films and the metal film being formed sequentially by sputtering and an inorganic hydrophilic film having a light transmission property formed on a front surface of the transparent substrate, said inorganic hydrophilic film constituting an outermost layer and imparting a hydrophilic property to the surface of the anti-fog mirror, said method comprising a step of forming the reflected film comprising a metal film made of Cr, Ni-Cr or Ti on the rear surface of the substrate is performed before forming the inorganic hydrophilic film on the front surface of the transparent substrate by vacuum deposition in a state wherein the substrate is heated to 450°C or below.

According to this method, the reflecting film is formed first on the rear surface of the substrate and then the inorganic hydrophilic film is formed on the front surface of the substrate and, accordingly, deposition of the material of the reflecting film on the surface of the inorganic hydrophilic film is prevented and decrease in the hydrophilic property thereby is prevented. Besides, since there is no need to cover the inorganic hydrophilic film with a masking material, the manufacturing process is simplified and the manufacturing cost thereby is reduced and, moreover, stability of the quality of the product is improved. Further, since the inorganic hydrophilic film is formed while temperature of the substrate is maintained within a relatively low range, oxidation of the reflecting film is prevented and occurrence of a pin hole and change of color thereby can be prevented.

By constructing the reflecting film with laminated films of plural layers of inorganic films and a metal film, said inorganic films having different refractive index and having an optical film thickness of λ/4 (where λ represents a specific wavelength) and said laminated films having a selective reflecting property with the specific wavelength λ being a center wavelength, the laminated films can be formed efficiently by sequentially forming the plural layer of the inorganic films and the metal film by sputtering. In this case, the metal film can be made of, e.g., Cr, Ni-Cr or Ti. This metal film is in passive state and constitutes a very stable film produced by oxidation and has an excellent adhesion to glass and an oxide film. Accordingly, even if the metal material reaches the front surface of the substrate and is deposited thereon, it exercises a high adhesive force to the inorganic hydrophilic film or the photocatalizing film which is formed hereafter on the front surface of the substrate and, as a result, an inorganic hydrophilic film or a laminated film of a photocatalytic layer and an inorganic hydrophilic layer which will scarcely come off and has a high durability can be provided.

In one aspect of the invention, there is provided a method for manufacturing an anti-fog mirror comprising a transparent substrate, a reflecting film formed on a rear surface of the transparent substrate, . laminated films formed on a front surface of the transparent substrate, said laminated films being made of a TiO₂ film having a light transmission property and a photocatalytic function and a porous SiO₂ film having a light transmission property and a hydrophilic property laminated to each other with the porous SiO₂ film constituting an external layer and imparting a hydrophilic property to the surface of the anti-fog mirror, said method comprising a step of forming the laminated film of the TiO₂ layer and the porous SiO₂ layer directly on the front surface of the transparent substrate by vacuum deposition in a state wherein the transparent substrate is heated to a temperature within a range from 200°C to 450°C.

According to this method, the TiO₂ film and the porous SiO₂ film are formed by maintaining the temperature of the substrate within a relatively low temperature range, diffusion of alkali ions contained in the substrate into the TiO₂ film is prevented whereby a sufficient photocatalytic function can be obtained. Accordingly, the TiO₂ film and the porous SiO₂ film can be formed directly on the front surface of the substrate whereby the manufacturing process is simplified and the manufacturing cost thereby is reduced.

The plural layers of inorganic films can be made of, e.g., laminated films of a TiO₂ film and a SiO₂ film, or TiO₂ films having different refractive index. The inorganic films may be combined with a metal film such as a Cr film to create a high adhesion between them. In this case, by constructing the inorganic hydrophilic film with a porous SiO₂ film and forming a TiO₂ film having a light transmission property and a photocatalytic function between the transparent substrate and the porous SiO₂ film when the TiO₂ film or SiO₂ film is formed on the rear side of the substrate, the material of the inorganic film may reach the front surface of the substrate and is deposited thereon but it has a high adhesive force to the photocatalytic TiO₂ film which is formed later on the front surface of the substrate and a high durability thereby can be obtained.

Further, forming of the TiO₂ film and the porous SiO₂ film while maintaining temperature of the substrate within a relatively low range prevents diffusion of alkali ions contained in the substrate into the TiO₂ film and, therefore, a sufficient photocatalytic function can be obtained without providing a blocking layer. Therefore, the TiO₂ film and the porous SiO₂ film can be formed directly on the front surface of the substrate and the manufacturing process thereby is simplified and the manufacturing cost is reduced.

Embodiments of the invention will be described below with reference to the accompanying drawings.

In the accompanying drawings,
FIGs. 1A and 1B are sectional views of an embodiment of an anti-fog mirror made according to the invention;
FIG. 2 is a characteristic diagram showing change of waterdrop contact angle on the thickness of a porous SiO₂ film in the anti-fog mirror shown in FIG. 1A;
FIG. 3 is a characteristic diagram showing change of waterdrop contact angle on a surface roughness of the porous SiO₂ film of the anti-fog mirror shown in Fig. 1A;
FIG. 4 is a characteristic diagram showing change of waterdrop contact angle on the number of days during which the mirror is left in the room in the anti-fog mirror shown in FIG. 1A;
FIG. 5 is a flow chart showing a manufacturing process of anti-fog mirrors shown in FIGs. 1, 10, 11 and 15;
FIG. 6 is a view showing a jig used for sputtering of the reflecting film shown in FIG. 1A;
FIG. 7 is a view showing a sputtering process using the jig shown in FIG. 6:
FIG. 8 is a characteristic diagram showing change of waterdrop contact angle by the substrate heating temperature in the process of manufacturing the anti-fog mirror shown in FIG. 1A;
FIG. 9 is a characteristic diagram showing spectral characteristics of the anti-fog mirror shown in FIG. 1A;
FIG. 10 is a sectional view showing another embodiment of an anti-fog mirror made according to the invention;
FIG. 11 is a sectional view showing another embodiment of an anti-fog mirror made according to the invention;
FIG. 12 is a view showing a jig used for sputtering a reflecting film shown in FIGs. 10 and 11;
FIG. 13 is a view showing a sputtering process using the jig of FIG. 12; and
FIG. 14 is a characteristic diagram showing spectral characteristics of the anti-fog mirror shown in FIG. 10 or 11.

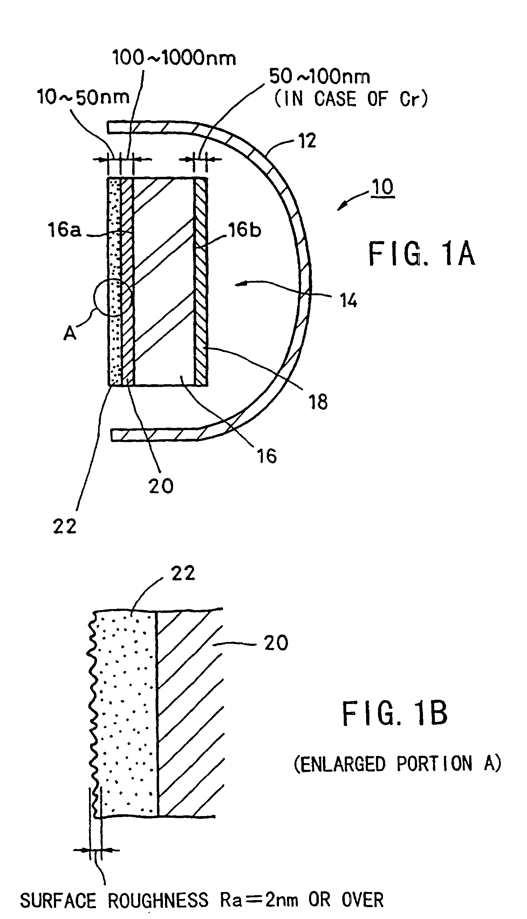

An embodiment of the invention in which the anti-fog mirror made according to the invention is applied to an outer mirror of a vehicle is shown in FIG. 1A. An outer mirror 10 has an anti-fog mirror 14 disposed in an opening of a mirror housing 12. In the anti-fog mirror 14, a reflecting film 18 is made of a metal film such as Cr, Ni-Cr or Ti formed on a rear surface of a transparent glass substrate 16. On a front surface of the transparent glass substrate 16 are formed laminated films of a TiO₂ film 20 which constitutes a photocatalyzing film and a SiO₂ film 22 which constitutes an inorganic hydrophilic film made of an inorganic oxide film. The surface of the SiO₂. is porous as shown in FIG. 1B in an enlarged scale and therefore is remarkably hydrophilic. The thickness of the reflecting film 18 is set at a value within a range from 50nm to 1000nm in the case of, e.g., Cr.

The thickness of the photocatalyzing TiO₂ film and the porous SiO₂ film exercises a great influence on the ability to decompose contaminants deposited on the surface of the SiO₂ film 22 (i.e., photocatalyzing ability). The following Table 1 shows a result of measurement of a waterdrop contact angle in a case where the thickness of the photocatalyzing TiO₂ film 20 was set at various values and car-washing and wax-coating were made on a real automobile once a month for six months.

**Table 1**

| Film thickness of photocatalyzing TiO₂ film | Waterdrop contact angle | |
|---|---|---|
| | Initial | After 6 months |
| 75nm | 5° or below | 30° to 40° |
| 100nm | same as above | 20° or below |
| 150nm | same as above | 10° or below |
| 200nm | same as above | same as above |
| 300nm | same as above | same as above |

According to Table 1, in case the film thickness is 100nm or over, the contact angle is 20° or below, indicating that the hydrophilic property is maintained. An excessively large thickness of the photocatalyzing TiO₂ film 20 deteriorates the reflecting property and also prolongs time for forming the film, resulting in increase in the manufacturing cost. For these reasons, a film thickness of 1000nm or below is preferable. Therefore, an optimum range of the thickness of the photocatalyzing TiO₂ film 20 is from 100nm to 1000nm.

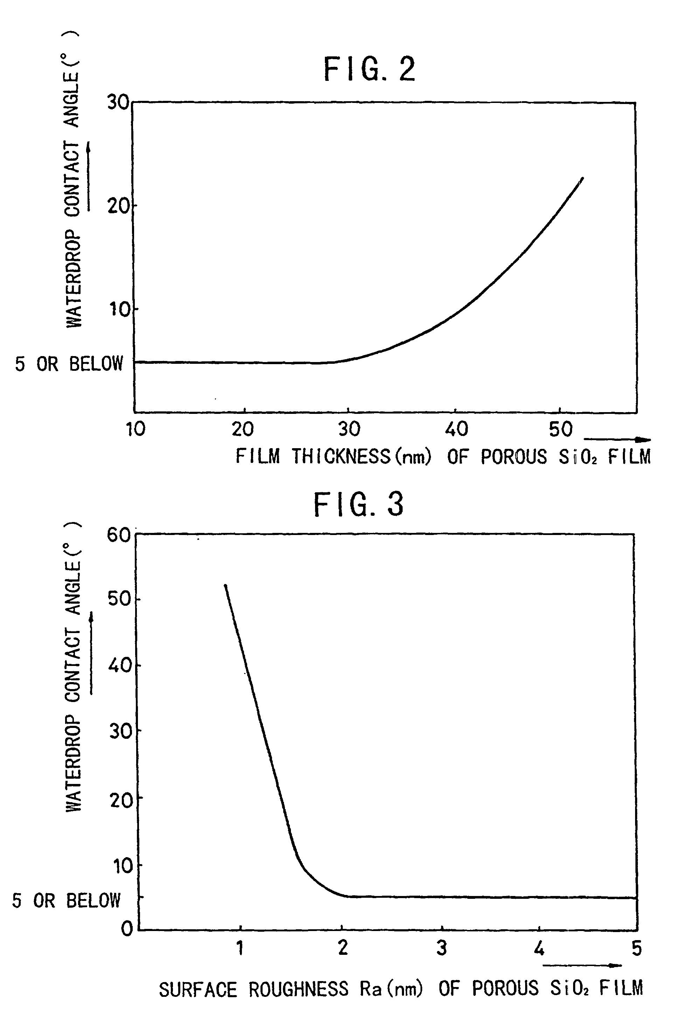

Change in the waterdrop contact angle depending upon the thickness of the porous SiO₂ film is shown in FIG. 2. The diagram shows a result of measurement made when oil was deposited on the surface of the porous SiO₂ film 22 and black light with intensity of 1m W/cm² was irradiated thereon for 24 hours. According to the result of measurement, in case the film thicness is 50nm or below, the contact angle is 20 ° or below, indicating that the hydrophilic property is maintained. A too small thickness of the porous SiO₂ film 22, however, reduces the film strength and deteriorates wear resistance. Table 2 shows a result of observation of appearance of the surface in a case where the thickness of the porous SiO₂ film 22 was set at various values and a brush wrapped with cloth was reciprocally moved on the surface 1000 times at a load of 1N/cm².

**Table 2**

| Film thickness of porous SiO₂ film | Appearance |
|---|---|
| 5nm | scratches due to rubbing observed |
| 10nm | no scratches observed |
| 20nm | same as above |
| 30nm | same as above |

According to Table 2, a film thickness of 10nm or over ensures a sufficient film strength. Accordingly, an optimum range of the thickness of the porous SiO₂ film is from 10nm to 50nm.

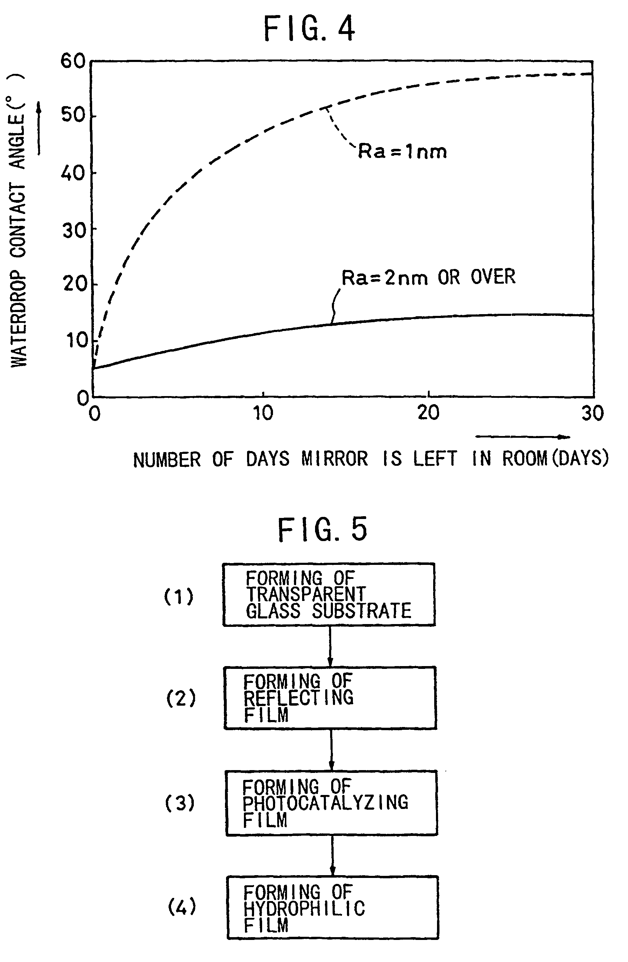

The surface roughness of the porous SiO₂ film 22 directly influences the hydrophilic property. FIG. 3 shows a result of measurement of the waterdrop contact angle in case the surface roughness Ra of the porous SiO₂ film 22 is set at various values. The surface roughness Ra here is an arithmetic mean surface roughness Ra defined in JIS B 0601^{·1994} and can be obtained on the basis of measurement by, e.g., AFM (atomic force microscope). According to FIG. 3, a surface roughness Ra of 2nm or over ensures a sufficient hydrophilic property. FIG. 4 shows a result of measurement of the waterdrop contact angle in case the surface roughness of the porous SiO₂ film 22 was set at 1nm and 2nm or over and they were left in a dark room. According to the result of measurement, the hydrophilic property is deteriorated rapidly at the surface roughness of 1nm whereas the hydrophilic property is deteriorated gradually at the surface roughness of 2nm or over.

An example of processes for manufacturing the anti-fog mirror 14 of FIG. 1A will be described with reference to FIG. 5.

### (1) Production of the glass substrate

First of all, the transparent glass substrate 16 is formed into a predetermined mirror substrate configuration. Generally, a plate glass (soda-lime glass) is used for a vehicle mirror by reason of its advantages in the cost and quality.

### (2) Forming of the reflecting film

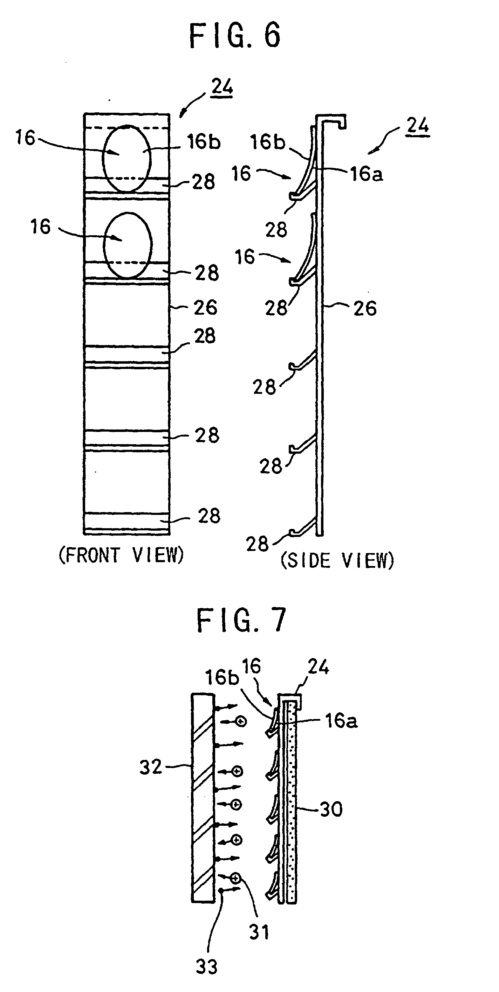

The reflecting film 18 is formed on the rear surface of the transparent glass substrate 16 with Cr, Cr-Ni or Ti. The film forming can be accomplished by, e.g., sputtering. FIG. 6 shows an example of a jig used for sputtering. This jig 24 has shelves 28 which are vertically arranged at a predetermined interval along a side of a vertically disposed plate 26. The transparent glass substrates 16 are rested against the shelves 28 in one substrate for one shelf relationship with the rear surface 16b of the substrate 16 facing outside. This jig 24 is supported perpendicularly by a jig holder 30 shown in FIG. 7 and is opposed to a target 32 (Cr, Cr-Ni, Ti etc.). Sputtering is performed by causing ions 31 such as argon ions to collide against the target 32 and thereby causing sputtering atoms or molecules 33 to pop out of the target 32 and scatter to be deposited on the rear surfaces 16b of the transparent glass substrates 16. At this time, a part of the sputtering atoms or molecules 33 which have failed to be deposited on the rear surfaces 16b of the transparent glass substrates 16 strike against the jig 24 and a part of them are reflected to be deposited on the front surfaces 16a of the transparent glass substrates 16 (this phenomenon is called "secondary sputtering"). Thickness of the sputtering atoms or molecules 33 deposited on the front surface 16a is considered to be in the order of several tenths nm but even a film having a thickness of this order deteriorates the hydrophilic property when it is deposited on the hydrophilic film 22 (i.e., the porous SiO₂ film). Since, in this embodiment, the reflecitng film 18 is formed before forming of the hydrophilic film 22, such inconvenience never arises. Moreover, Cr, Ni and Ti produce a very stable film due to oxidation and thereby are in passive state. Since such a film has an excellent adhesion to glass and an oxide film, even if the photocatalyzing TiO₂ film 20 and the porous SiO₂ film 22 are formed on the film of Cr, Ni-Cr or Ti which are formed on the front surface 16a of the transparent glass substrate 16 due to the secondary sputtering, the film of Cr, Ni-Cr or Ti will exercise a high adhesive force to the films 20 and 22 and, therefore, these films 20 and 22 will scarcely come off and their durability will not be adversely affected.

### (3) Forming of the photocatalyzing film

For ensuring a sufficient photocatalytic function of the TiO₂ film 20, it is necessary to form an anatase type crystal structure. For forming an anatase type crystal structure, heat energy of a certain order is required and, for this purpose, the film forming must be made while the transparent glass substrate 16 is in a heated state, When, however, the temperature of the transparent glass substrate 16 exceeds 500°C, Na ions in the transparent glass substrate 16 are diffused into the TiO₂ film 20 and NaₓTi_{y}O_{z} domains are thereby produced and the photocatalytic function of the TiO₂ film 20 is seriously impaired. For this reason, when forming of the TiO₂ film 20 is made by using the sol-gel method which requires calcination of the material at a high temperature, provision of a blocking layer (using, e.g., SiO₂) becomes necessary and this complicates the manufacturing process.

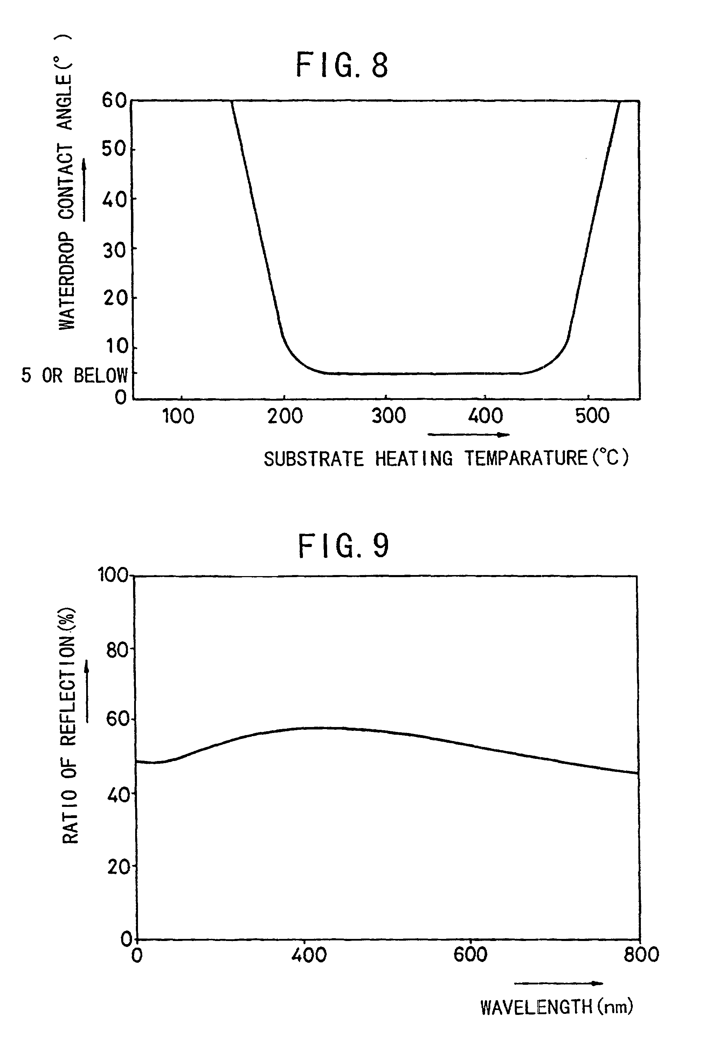

Accordingly, in this embodiment, the photocatalyzing TiO₂ film 20 and the porous SiO₂ film 22 are formed by vacuum deposition. FIG. 8 shows a result of measurement of change of the waterdrop contact angle in case the films 20 and 22 are formed by vacuum deposition by setting the temperature of the transparent glass substrate 16 at various values. This is a result of measurement obtained when oil was deposited on the surface of the porous SiO₂ film 22 and black light was irradiated for 24 hours at an intensity of 1mW/cm² According to FIG. 8, by forming the TiO₂ film 20 at a substrate temperature within a range from 200°C to 450°C, the anatase type crystal structure can be formed and a sufficient photocatalytic function can thereby be obtained. Since Na ions do not diffuse within this temperature range, the provision of the block layer is not required and the manufacturing process thereby is simplified. Moreover, occurrence of a pin hole or change of color in the reflecting film 18 can be prevented.

### (4) Forming of the hydrophilic film

The SiO₂ film 22 is formed by vacuum deposition while the substrate temperature is maintained within the range from 200°C to 450°C. During this process, the surface of the film 22 can be made porous by, e.g., increasing the speed of deposition or increasing partial pressure of oxygen. More specifically, by increasing the speed of deposition, it becomes difficult to make a uniform surface and it becomes easy to form a film having projections and depressions. By increasing partial pressure of oxygen, energy applied to the surface of a substrate (in this case, the surface of the TiO₂ film 20) is reduced with the result that it becomes easy to make a film having projections and depressions.

An example of conditions for forming the TiO₂ film 20 to a dense texture and forming the SiO₂ film to a porous film is shown in Table 3.

**Table 3**

| | Photocatalyzing TiO₂ film | Porous SiO₂ film |
|---|---|---|
| Vapor deposition speed | 0.3nm/sec. | 0.5nm/sec. |
| Partial pressure of oxygen | 1.0 × 10⁻⁴ torr | 2.0 × 10⁻⁴ torr |
| Substrate temperature | 300°C | 300°C |

Spectral characteristics of the anti-fog mirror 14 of FIG. 1A which has been made by the above described processes are shown in FIG. 9. This is a result in case the reflecting film 18 is made of Cr. A result of observation of adhesion of the reflecting film to the substrate in case the reflecting film 18 is made of Cr, Ni-Cr and Ti respectively is shown in Table 4.

**Table 4**

| Reflecting film | Result |
|---|---|
| Cr | Coming off of the film was not observed |
| Ni-Cr | same as above |
| Ti | same as above |

Table 4 shows a result obtained in case the film was boiled for 5 hours in 5% salt water. According to Table 4, the film does not come off in any case, indicating that a high durability is ensured.

A result of measurement of influence by the secondary sputtering is shown in Table 5.

**Table 5**

| | (a) Reflecting film was formed later | | (b) Reflecting film was formed first |
|---|---|---|---|
| | Without masking | With masking | |
| Waterdrop contact angle after production | about 15 - 20° | 10° or below | 5° or below |
| Dirt dissolving ability | × | ○ | ○ |

According to Table 5, in the process of FIG. 5 in which the reflecting film was formed first and the porous SiO₂ film was formed later, better results were obtained in both the waterdrop contact angle and the contaminants decomposing ability as compared with the case (a) where the porous SiO_{2,} film was formed first and the reflecting film was formed later.

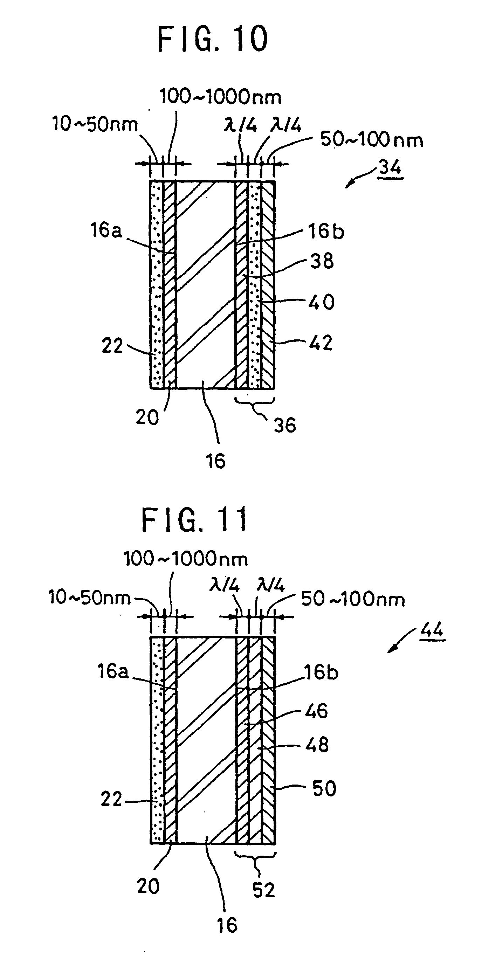

Other embodiments of the invention in which the anti-fog mirror of the invention is applied to an outer mirror of a vehicle are shown in section in FIGs. 10 and 11 which show a main body of the respective anti-fog mirrors only. In these embodiments, the same component parts as those shown in FIG. 1A are designated by the same reference characters. In these embodiments, anti-fog mirrors are constructed as blue mirrors which reflect light in a bluish color by increasing the reflectance of a specific wavelength. An anti-fog mirror 34 of FIG. 10 has a reflecting film 36 having a selective reflecting characteristic of a specific wavelength by forming plural layers of inorganic films made of a TiO₂ film 38 having a relatively high refractive index and a SiO₂ film 40 having a relatively low refractive index and further a metal film 42 made of Cr on the rear surface 16b of a transparent glass substrate 16. The thickness of each of the TiO₂ film 38 and the SiO₂ film 40 is set at an optical film thickness which is 1/4 of a wavelength λ to be emphasized. If, for example, a center wavelength to be emphasized is 450nm, the film thickness of the TiO₂ film 38 (refractive index 2.4) is set to 450/4/2.4 = about 47nm.

An anit-fog mirror 44 of FIG. 11 has a reflecting film 52 having a selective reflecting property of a specific wavelength by forming plural layers of inorganic films made of a TiO₂ film 46 having a relatively high refractive index and a TiO₂ film 48 having a relatively low refractive index and further a metal film 50 made of Cr. The thickness of each of the TiO₂ films 46 and 48 is set at an optical film thickness which is 1/4 of a wavelength λ to be emphasized. Refractive indexes of the TiO₂ films 46 and 48 can be adjusted by the amount of oxygen gas introduced during the film forming process (i.e., the more is the amount of oxygen gas, the smaller is the refractive index).

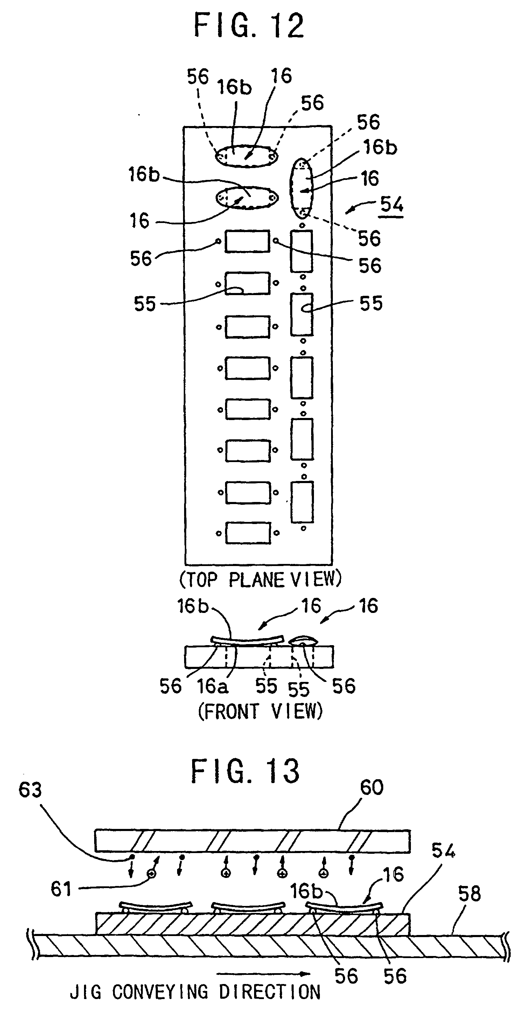

The anti-fog mirrors 34 and 44 of FIGs. 10 and 11 are manufactured in a manner similar to the manufacturing processes described above with respect to the anti-fog mirror 14 of FIG. 1A. The plural films of the reflecting films 36 and 52 which are made respectively of plural films can be formed continuously by employing, e.g., an in-line sputtering device. An example of a jig used for the in-line type sputtering device is shown in FIG. 12. This jig 54 is made of a horizontal plate which has openings 55 formed at a predetermined interval. Transparent glass substrates 16 are placed on and supported by a pair of supporting projections 56 provided on both sides of each opening 55 with a rear surfaces 16b of the substrate 16 facing upside.

As shown in FIG. 13, the jig 54 is conveyed at a constant speed by a conveyer 58 in the in-line type sputtering device to pass under a target 60 which is fixedly disposed above the conveyer 58. Sputtering is performed by causing ions 61 such as argon ions to collide against the target 60 and thereby causing sputtering atoms or molecules 63 to pop out of the target 60 and scatter to be deposited on the rear surface 16b of the transparent glass substrate 16.

Upon completion of forming of the first film 38 (46), the next film 40 (48) is formed in a position where the jig 54 passes under a next target and the last film 42 (50) is formed in a position where the jig 54 passes under a next target to complete the forming of the reflecting film 36 (52).

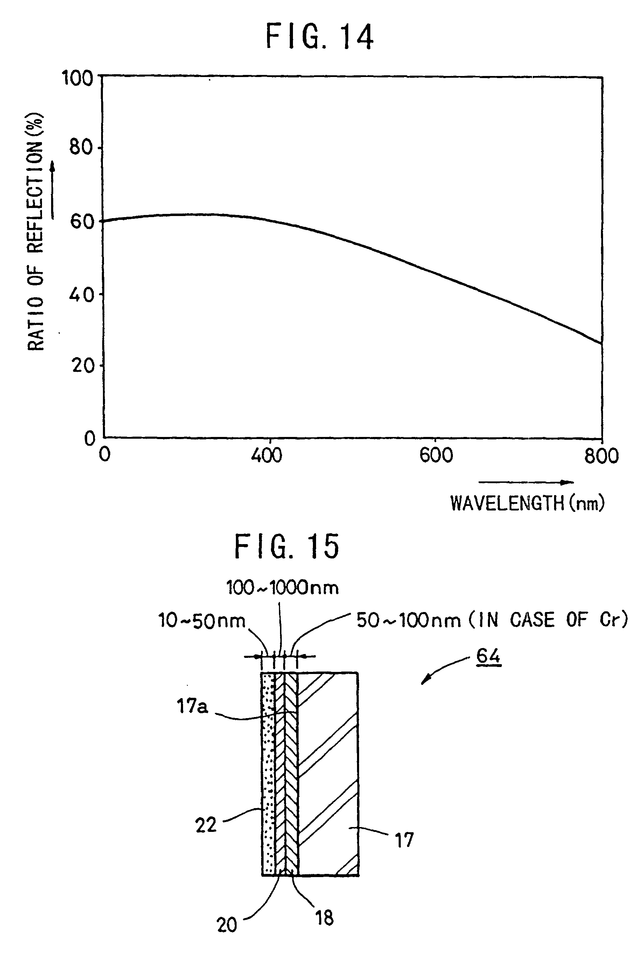

Spectral characteristics of the anti-fog mirror 34 or 44 of FIG. 10 or 11 are shown in FIG. 14. A result of measurement of adhesion of the reflecting film to the substrate is shown in Table 6.

**Table 6**

| Reflecting film | Result |
|---|---|
| TiO₂/SiO₂/Cr | coming off of the film was not observed |
| TiO₂/TiO₂/Cr | same as above |

Table 6 shows a result of measurement made when the film was boiled for 5 hours in 5% salt water. According to Table 6, coming off of the film does not take place in any case, indicating that a high durability is ensured.

During the forming process of the reflecting films 36 and 52, sputtering atoms and molecules 63 reach the front surface 16a of the substrate 16 and deposited thereon. The film formed by these sputtering atoms or molecules 63 has a high adhesion to the front surface 16a and also to the photocatalyzing TiO₂ film 20 formed on the front surface 16a.

Description has been made in the above described embodiments about cases where the anti-fog mirrors are applied to an outer mirror of a vehicle. The anti-fog mirros made according to the invention, however, may be applied to other mirrors such, for example, as a bath-room mirror.

## Claims

1. A method for manufacturing an anti-fog mirror (14,34,44) comprising a transparent substrate (16), a reflecting film (18,36,52) formed on the rear surface (16b) of the transparent substrate (16),
wherein said reflecting film is made of Cr, Ni-Cr or Ti or said reflecting film is made of a laminated film of plural layers of inorganic films (38,40;46,48) and a metal film (42;50) made of Cr, Ni-Cr or Ti being located on the laminated film of plural layers of inorganic films (38,40;46,48) remotely from the transparent substrate (16), said inorganic films (38,40;46,48) having different refractive indices and having an optical film thickness of λ/4 (where λ represents a specific wavelength) and said laminated film having a selective reflecting property with the specific wavelength λ being a center wavelength, the plural layers of the inorganic films and the metal film being formed sequentially by sputtering,
and an inorganic hydrophilic film having a light transmission property formed on a front surface (16a) of the transparent substrate (16), said inorganic hydrophilic film constituting an outermost layer and imparting a hydrophilic property to the surface of the anti-fog mirror (14),
**characterized in that**
the step of forming the reflecting film (18,36,52) comprising a metal film made of Cr, Ni-Cr or Ti on the rear surface (16b) of the substrate (16) is performed before forming the inorganic hydrophilic film on the front surface of the transparent substrate (16) by vacuum deposition in a state wherein the substrate is heated to 450 °C or below.

2. A method for manufacturing an anti-fog mirror (14,34,44) as defined in claim 1, wherein said inorganic hydrophilic film formed on the front surface (16a) of the transparent substrate (16) is a laminated film of a TiO₂ layer (20) having a photocatalytic function, and a porous SiO₂ layer (22) formed on the TiO₂ film (20) and having a hydrophilic property.

3. A method for manufacturing an anti-fog mirror (34) as defined in claims 1 or 2 wherein the plural layers of the inorganic films are made of a laminated film of a TiO₂ layer (38) and a SiO₂ layer (40) being located remotely from the transparent substrate (16), said metal film (42) is made of Cr, said inorganic hydrophilic film is made of a porous SiO₂ film (22) and a TiO₂ film (20) having a light transmission property and a photocatalytic function is formed between the transparent substrate (16) and the porous SiO₂ film (22).

4. A method for manufacturing an anti-fog mirror (44) as defined in one of the claims 1 to 3 wherein the plural layers of the inorganic films are made of a laminated film of a TiO₂ layer (46) having a relatively high refractive index and a TiO₂ layer (48) having a relatively low refractive index with the latter being located remotely from the transparent substrate (16), said metal film (50) is made of Cr, said inorganic hydrophilic film is made of a porous SiO₂ film (22) and a TiO₂ film (20) having a light transmission property and a photocatalytic function is formed between the transparent substrate (16) and the porous SiO₂ film (22).

## Patentansprüche

1. Verfahren zur Herstellung eines Anti-Beschlagspiegels (14, 34, 44) mit einem transparenten Substrat (16) und einem reflektierenden Film (18, 36, 52), der auf der Rückseite (16b) des transparenten Substrats (16) ausgebildet ist,
wobei der reflektierende Film aus Cr, Ni-Cr oder Ti oder aus einem laminierten Film aus mehreren Schichten anorganischer Filme (38, 40; 46, 48) und einem Metallfilm (42; 50) aus Cr, Ni-Cr oder Ti besteht, der auf dem laminierten Film aus mehreren Schichten anorganischer Filme (38, 40; 46, 48) entfernt vom transparenten Substrat (16) angeordnet ist, wobei die anorganischen Filme (38, 40; 46, 48) unterschiedliche Brechungsindizes und eine optische Filmdicke von λ/4 (wobei λ eine spezifische Wellenlänge bezeichnet) aufweisen und der laminierte Film eine selektive Reflexionseigenschaft hat, wobei die spezifische Wellenlänge λ eine zentrale Wellenlänge ist, wobei die mehreren Schichten anorganischer Filme und der Metallfilm nacheinander durch Sputtern gebildet werden,
und einem auf der Vorderseite (16a) des transparenten Substrats (16) ausgebildeten anorganischen hydrophilen Film mit einer Lichtdurchlaßeigenschaft, wobei der anorganische hydrophile Film die äußerste Schicht bildet und der Oberfläche des Anti-Beschlagspiegels (14) eine hydrophile Eigenschaft verleiht,
**dadurch gekennzeichnet, daß**
der Schritt des Bildens des reflektierenden Films (18, 36, 52), der einen Metallfilm aus Cr, Ni-Cr oder Ti aufweist, auf der Rückseite (16b) des Substrats (16) vor dem Bilden des anorganischen hydrophilen Films auf der Vorderseite des transparenten Substrats (16) durch Vakuumbeschichtung in einem Zustand erfolgt, in dem das Substrat auf 450°C oder weniger erwärmt ist.

2. Verfahren zur Herstellung eines Anti-Beschlagspiegels (14, 34, 44) nach Anspruch 1, bei dem der auf der Vorderseite (16a) des transparenten Substrats (16) ausgebildete anorganische hydrophile Film ein laminierter Film aus einer TiO₂-Schicht (20) mit einer photokatalytischen Funktion und einer porösen SiO₂-Schicht (22) ist, die auf dem TiO₂-Film (20) ausgebildet ist und eine hydrophile Eigenschaft hat.

3. Verfahren zur Herstellung eines Anti-Beschlagspiegels (34) nach den Ansprüchen 1 oder 2, bei dem die mehreren anorganischen Filme aus einem laminierten Film aus einer TiO₂-Schicht (38) und einer SiO₂-Schicht (40) besteht, der von dem transparenten Substrat (16) entfernt angeordnet ist, wobei der Metallfilm (42) aus Cr besteht, wobei der anorganische hydrophile Film aus einem porösen SiO₂-Film (22) und einem TiO₂-Film (20) mit einer hydrophilen Lichtdurchlaßeigenschaft und einer photokatalytischen Eigenschaft besteht, der zwischen dem transparenten Substrat (16) und dem porösen SiO₂-Film (22) ausgebildet ist.

4. Verfahren zur Herstellung eines Anti-Beschlagspiegels (44) nach einem der Ansprüche 1 bis 3, bei dem die mehreren Schichten anorganischer Filme aus einem laminierten Film aus einer TiO₂-Schicht (46) mit einem relativ hohen Brechungsindex und einer TiO₂-Schicht (48) mit einem relativ niedrigen Brechungsindex bestehen, wobei letzterer von dem transparenten Substrat (16) entfernt angeordnet ist, wobei der Metallfilm (50) aus Cr besteht, wobei der anorganische hydrophile Film aus einem porösen SiO₂-Film (22) und einem TiO₂-Film (20) mit einer hydrophilen Lichtdurchlaßeigenschaft und einer photokatalytischen Eigenschaft besteht, der zwischen dem transparenten Substrat (16) und dem porösen SiO₂-Film (22) ausgebildet ist.

## Revendications

1. Procédé de fabrication d'un miroir antibuée (14, 34, 44) comprenant un substrat transparent (16), une pellicule réfléchissante (18, 36, 52) formée sur la surface arrière (16b) du substrat transparent (16), procédé dans lequel
ladite pellicule réfléchissante est fabriquée à partir de Cr, de Ni-Cr ou de Ti ou ladite pellicule réfléchissante est fabriquée à partir d'une pellicule stratifiée de plusieurs couches de pellicules minérales (38, 40 ; 46, 48) et d'une pellicule métallique (42 ; 50) fabriquée à partir de Cr, Ni-Cr ou de Ti et placée sur la pellicule stratifiée de plusieurs couches de pellicules minérales (38, 40 ; 46, 48) à distance du substrat transparent (16), lesdites pellicules minérales (38, 40 ; 46, 48) présentant différents indices de réfraction et ayant une épaisseur de pellicule optique de λ/4 (où λ représente une longueur d'onde spécifique) et ladite pellicule stratifiée présentant une propriété de réflexion sélective, la longueur d'onde spécifique λ étant une longueur d'onde centrale, les multiples couches de pellicules minérales et la pellicule métallique étant formées séquentiellement par pulvérisation,
et une pellicule minérale hydrophile présentant une propriété de transmission de lumière étant formée sur une surface avant (16a) du substrat transparent (16), ladite pellicule minérale hydrophile constituant une couche extérieure et conférant une propriété hydrophile à la surface du miroir antibuée (14),
**caractérisé en ce que**
l'étape consistant à former la pellicule réfléchissante (18, 36, 52) comprenant une pellicule métallique fabriquée à partir de Cr, Ni-Cr ou Ti sur la surface arrière (16b) du substrat (16) est effectuée avant la formation de la pellicule minérale hydrophile sur la surface avant du substrat transparent (16) par dépôt sous vide dans un état où le substrat est chauffé à 450°C ou moins.

2. Procédé de fabrication d'un miroir antibuée (14, 34, 44) selon la revendication 1, dans lequel ladite pellicule minérale hydrophile formée sur la surface avant (16a) du substrat transparent (16) est une pellicule stratifiée d'une couche de TiO₂ (20) ayant une fonction catalytique, et d'une couche de SiO₂ poreuse (22) formée sur la pellicule de TiO₂ et présentant une propriété hydrophile.

3. Procédé de fabrication d'un miroir antibuée (34) selon la revendication 1 ou 2, dans lequel les multiples couches de pellicules minérales sont constituées d'une pellicule stratifiée d'une couche de TiO₂ (38) et d'une couche de SiO₂ (40) placée à distance du substrat transparent (16), ladite pellicule métallique (42) étant fabriquée à partir de Cr, ladite pellicule minérale hydrophile étant constituée d'une pellicule de SiO₂ poreuse (22) et d'une pellicule de TiO₂ (20) présentant une propriété de transmission de lumière et une fonction photocatalytique est formée entre le substrat transparent (16) et la pellicule de SiO₂ poreuse (22).

4. Procédé de fabrication d'un miroir antibuée (44) selon l'une des revendications 1 à 3, dans lequel les multiples couches de pellicules minérales sont constituées d'une pellicule stratifiée d'une couche de TiO₂ (46) présentant un indice de réfraction relativement élevé et d'une couche de TiO₂ (48) présentant un indice de réfraction relativement faible, cette dernière couche étant placée à distance du substrat transparent (16), ladite pellicule métallique (50) étant fabriquée à partir de Cr, ladite pellicule minérale hydrophile étant constituée d'une pellicule de SiO₂ poreuse (22) et d'une pellicule de TiO₂ (20) présentant une propriété de transmission de lumière et une fonction photocatalytique est formée entre le substrat transparent (16) et la pellicule de SiO₂ poreuse (22).
